# EUROPEAN PATENT APPLICATION

(11) **EP 4 478 766 A1**
(43) Date of publication of application: **18.12.2024**
(21) Application number: 23382583.5
(22) Date of filing: 12.06.2023
(51) Int. Cl.: H04W 12/108, H04L 9/32, H04W 4/14

(54) **SHORT MESSAGE SERVICE VALIDATION**

(71) Applicant: Lleidanetworks Serveis Telematics SL, 25003 Lleida (ES)
(72) Inventor: SAPENA SOLER, FRANCISCO, 25003 LLEIDA (ES); RAMON PIÑOL, JORDI, LLEIDA (ES); GARCIA TORRE, BEATRIZ, LLEIDA (ES)

(57) **Abstract**

Embodiments of the present disclosure may include a method for SMS validation, the method including A Trusted Third Party generating a pair of keys including a private key and a public key. Embodiments may also include a sender entity sending a SMS to a recipient mobile phone. Embodiments may also include a SMS operator receiving the public key generated by the Trusted Third Party. Embodiments may also include signing the SMS with the private key generated by the Trusted Third Party. Embodiments may also include Sending a SMS signed with the private key generated by the Trusted Third Party. Embodiments may also include Receiving the signed SMS at a SMS operator. Embodiments may also include Performing a first SMS signature match, generating either a validated SMS or a non-validated SMS. Embodiments also include receiving the validated SMS at the recipient mobile phone.

## Description

### OBJECT OF THE INVENTION

The object of the present invention belongs to the field of telecommunications.

More specifically the present invention discloses a method for avoiding and preventing SMS Fishing also known as "Smishing". Smishing is a form of phishing in which an attacker uses a compelling text message to trick targeted recipients into clicking a link and sending the attacker private information or downloading malicious programs to a smartphone.

### BACKGROUND

Most of the 3.5 billion smartphones in the world can receive text messages from any number in the world. Many users are already aware of the dangers of clicking a link in email messages. Fewer people are aware of the dangers of clicking links in text messages. Users are much more trusting of text messages, so smishing is often lucrative to attackers phishing for credentials, banking information and private data.

Smishing is a type of social engineering attack in which scammers use text messages (Short Message Service hereinafter SMS) or other messaging apps to trick people into revealing sensitive information, downloading malware, or performing some other harmful action.

The term "smishing" comes from a combination of "SMS" and "phishing," which refers to a similar type of attack that uses email instead of text messages.

In a typical smishing attack, the attacker sends a text message that appears to be from a trusted source, such as a bank, a popular e-commerce site, or a government agency. The message may contain a link that, when clicked, takes the victim to a fake website that looks like the real one, but is designed to steal their login credentials or personal information. Alternatively, the message may ask the victim to call a phone number or reply with sensitive information, such as their credit card number or social security number.

In one smishing attack, scammers sent out a text message claiming to be from a popular online retailer, saying that the recipient's account had been compromised. The message instructed the recipient to click on a link to reset their password. The link took the victim to a fake login page that looked like the real one but was controlled by the attackers.

When the victim entered their login credentials on the fake page, the scammers were able to steal their username and password. They then used this information to log in to the victim's account and make fraudulent purchases.

In another smishing case, scammers sent out text messages that appeared to be from a bank, asking the recipient to call a phone number to verify their account information. When the victim called the number, they were connected to a scammer who pretended to be a bank representative and asked for their account number and other sensitive information. With this information, the scammer was able to access the victim's bank account and steal their money.

To avoid falling victim to smishing, it is important to be cautious when receiving unsolicited text messages or messages from unknown sources. Verify the identity of the sender before clicking on links or sharing any sensitive information. Additionally, never provide any personal information over text message, and be wary of messages that contain urgent requests or unusual requests.

Nowadays, there are several ways to fight smishing which may account as follows:
- Stay alert: Be cautious of any unsolicited text messages, especially those that ask for personal information or contain urgent requests. When possible, verify the sender's identity before taking any action; said identification might be done by means of verifying the alleged sending entity with the entity itself.
- Don't click on links: Avoid clicking on links in text messages, especially if they are from unknown senders or contain suspicious messages. Instead, go directly to the website by typing the URL into your browser.
- Use security software: Install a reputable mobile security app on your phone that can detect and block phishing attempts. Many of these apps also come with additional features like spam filters and anti-malware protection.
- Enable two-factor authentication: Whenever possible, enable two-factor authentication (2FA) on your accounts. This adds an extra layer of security and makes it more difficult for attackers to gain access to your account even if they have your password.
- Report suspicious messages (some terminals are configured to automatically report suspicious messages): If you receive a suspicious text message, report it to your mobile carrier and the Federal Trade Commission (FTC). This can help prevent other people from falling victim to the same scam.

By following these steps, you can significantly reduce your risk of becoming a victim of smishing attacks.

Current solutions are based on 2FA, two factors authentication; some new developments embrace new technologies; in this sense, KR102515721B1 discloses a method and apparatus for supporting NFP identity authentication using a one-time password for identity authentication based on blockchain are disclosed. The NFP identity authentication support method of the present invention includes the steps of receiving an identity authentication request from a user terminal, which is a device of a user requesting blockchain-based identity authentication, and requesting a one-time password generated by the user terminal and stored in a blockchain network to the user terminal. Step of verifying the one-time password received from the user terminal based on the result of searching for the one-time password stored in the blockchain network and transmitting the result of authentication performed through verification of the one-time password to the user terminal Include steps.

Furthermore, KR102431145B1 discloses a service providing method and apparatus for authentication management of an object using a dual-channel-based NFT. The service providing method of the present invention includes the steps of: acquiring condition information related to a condition required to determine a first channel used to register history information related to a transaction history performed based on an NFT issued for an object; Encrypting and registering key transaction information including history information in a first encryption method in a blockchain-based network corresponding to the determined first channel by determining the first channel based on the information, information and conditions of the first channel Encrypting and registering additional information related to the main transaction information of the object in a second channel supporting the first channel determined based on the information in a second encryption method, and based on the first channel and the second channel determined for the object It includes the step of providing a service for object authentication management using blockchain-based NFT for the object.

US9392456B2 discloses a service call between a service user and a call center for a service provider is established when the service user is contacted or calls into the call center of the service provider. The service provider may request basic account information for verification of the identity of the service user. If the service provider determines that a further verification of the user's identity is necessary, the service provider may send a verification code to the service user via the user communication device. The verification code is relayed back to the service provider. The transmitted verification code and the relayed verification code are compared and if the codes match, the user is authenticated.

### BRIEF SUMMARY

Embodiments of the present disclosure may include a method for SMS validation, the method including a Trusted Third Party generating a pair of keys including a private key and a public key. Embodiments may also include a sender entity sending a SMS to a recipient mobile phone. Embodiments may also include a SMS operator or aggregator receiving the public key generated by the Trusted Third Party.

Embodiments may also include signing the at least part of said SMS with the private key generated by the Trusted Third Party; in this sense the sender, the content, a hash generated from the whole SMS, the header, any part, or the whole SMS may be used to create said signature. Embodiments may also include Sending a SMS signed with the private key generated by the Trusted Third Party. Embodiments may also include Receiving the signed SMS at a SMS operator. Embodiments may also include Performing a first SMS signature match, generating either a validated SMS or a non-validated SMS. Embodiments may also include receiving the validated SMS at the recipient mobile phone.

In some embodiments, the method for SMS validation, the method further including sending the public key to the operator or SMS aggregator. Embodiments may also include performing a second SMS signature match, generating either a validated SMS or a non-validated SMS, carried out at the SMS aggregator which has been provided with the public key generated by the Trusted Third Party.

In some embodiments, the third SMS signature match may be carried out before the second SMS signature match process is initiated. In some embodiments, the method for SMS validation of either, the method further including sending the public key to a SMPP SMS gateway. Embodiments may also include performing a third SMS signature match, generating either a validated SMS or a non-validated SMS, carried out at a SMPP SMS gateway which has been provided with the public key generated by the Trusted Third Party.

As the skilled person would acknowledge in the light of the current description, the SMPP SMS gateway may be defined by a properly configured network entity such as the Sender SMS Gateway, an Intermediate SMS Gateway and or the telecommunications operator. Likewise, any node b/e-node b or network entity may handle the steps to carry out the signature verification and/or forward the required data to a network entity enabled to carry out said verification, i.e. to the respective RNC acting as governing element.

### BRIEF DESCRIPTION OF THE FIGURES

To enable better understanding of the present disclosure, and to show how the same may be carried into effect, reference will now be made, by way of example only, to the accompanying schematic drawings, in which:
FIG. 1 is a flowchart illustrating a method, according to some embodiments of the present disclosure.
FIG. 2 is a flowchart further illustrating the method from FIG. 1, according to some embodiments of the present disclosure.
FIG. 3 is a flowchart further illustrating the method from FIG. 1, according to some embodiments of the present disclosure.
FIG 4. is a flowchart illustrating the method of the invention, according to all the possible embodiments of the object of the invention where any possible embodiment is depicted therein.

### DETAILED DESCRIPTION

In a first aspect of the object of the invention hereby disclosed a method aimed to prevent Smishing is provided, the method of the objection is based on signatures generated from data related to a SMS sent from an individual or a corporation, hereinafter sender entity; said data may encompass data from the sender entity such as data related to a device used to generate and/or send the SMS, data related to the SMS itself such as header, body, time data, date, etc. Said SMS will be delivered by a SMS operator which will always be the last network entity handling the SMS before being delivered.

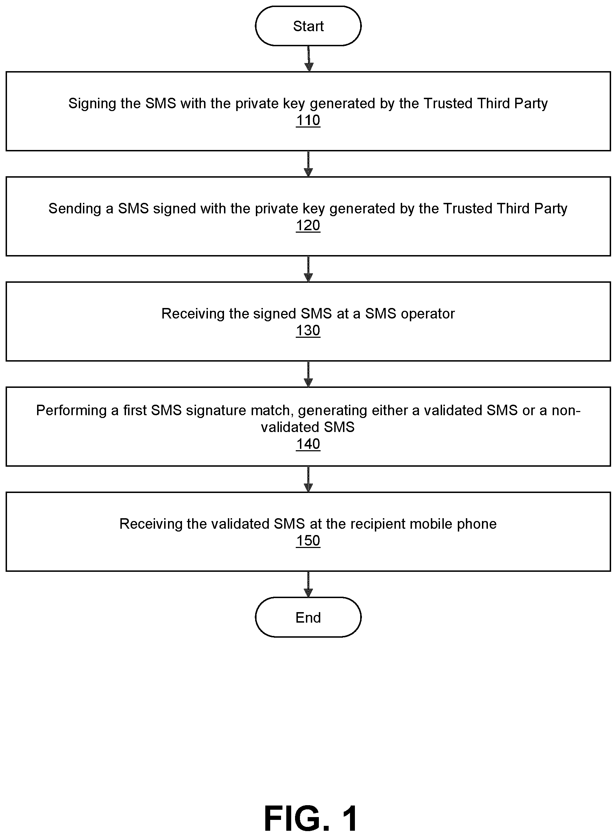

FIG. 1 is a flowchart that describes an embodiment of the present disclosure. In some embodiments, the sender entity sending the SMS to a recipient mobile phone. A SMS operator receiving a public key generated by a Trusted Third Party wherein at 110, the method may include signing a SMS with a private key generated by the Trusted Third Party. At 120, the method may include Sending the SMS signed with the private key generated by the Trusted Third Party. At 130, the method may include receiving the signed SMS at a SMS operator (hereinafter operator). At 140, the method may include performing a first SMS signature match, generating either a validated SMS or a non-validated SMS. At 150, the method may include receiving the validated SMS at the recipient mobile phone. A Trusted Third Party generating a pair of keys comprising a private key and a public key. The SMS operator may carry out the signature verification using a SMS firewall handling the SMS traffic and being accessible by said SMS operator.

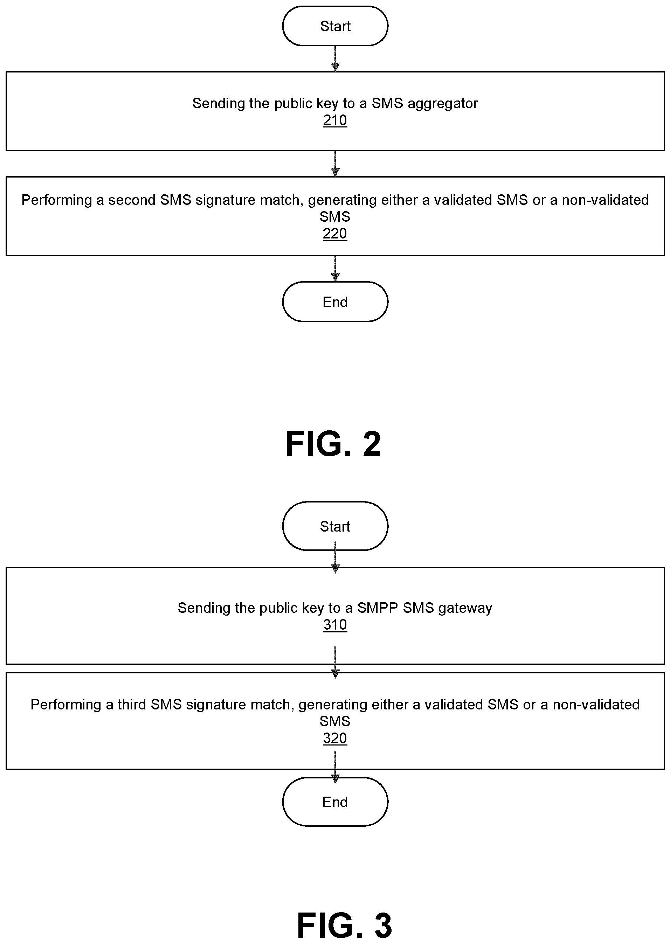

FIG. 2 is a flowchart that further describes the method from FIG. 1, according to some embodiments of the present disclosure. In some embodiments, the method for SMS validation. At 210, the method may include sending the public key to at least one SMS aggregator. At 220, the method may include performing a second SMS signature match, generating either a validated SMS or a non-validated SMS, carried out at the SMS aggregator which has been provided with the public key generated by the Trusted Third Party. In some embodiments, the third SMS signature match may be carried out before the second SMS signature match.

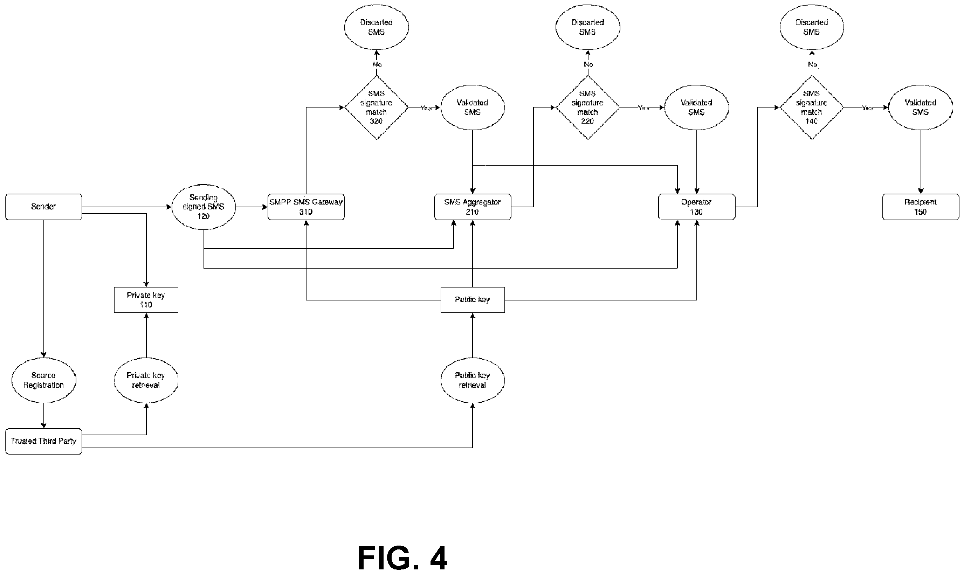

FIG. 3 is a flowchart that further describes the method from FIG. 1, according to some embodiments of the present disclosure. In some embodiments, the method for SMS validation of either. At 310, the method may include sending the public key to the above mentioned at least one SMS aggregator but in this specific embodiment the SMS aggregator uses SMPP protocols, becoming at least one SMPP SMS gateway. At 320, the method may include performing a third SMS signature match, generating either a validated SMS or a non-validated SMS, carried out at a SMPP SMS gateway which has been provided with the public key generated by the Trusted Third Party. Note that the SMS aggregator may be ruled by one Short Message Peer to Peer Protocol such as the already mentioned SMPP (Short Message Peer-to-Peer) protocol for an SMS as in figure 4, or SS7 defining a SS7 SMS gateway (not depicted in figures), or UCP defining a UCP SMS gateway (not depicted in figures).

As per FIG. 4 in a preferred embodiment of the invention the sender entity wants to send the SMS to the recipient mobile phone, in other words the recipient mobile phone receiving a SMS from the sender, either way the recipient mobile phone must receive a validated SMS, this can be achieved by performing the SMS signature matches where the signature is validated, in a preferred embodiment of the invention the first SMS signature match 140 carried at the operator is favored. Additional second 220 and/or third SMS signature matches 320 may be carried out at the aggregator and/or the SMPP SMS gateway respectively.

In a yet more alternative embodiment, the operator is the entity carrying out the verification, this would be mandatory in this embodiment because the operator is last entity handling the SMS before delivery to the recipient, any prior entity in the network might tamper the SMS but the operator is the very last entity, thus this entity would be the one verifying the SMS before it is delivered as a validated SMS.

As the skilled person would derive from FIG. 4, at least one of any one of the: operator, at least one SMS aggregator, such a SMPP SMS gateway, may be furnished with the public key generated by the Trusted Third Party needed to perform the corresponding SMS signature match 140, 220, 320. At least the first SMS signature match 140 at the operator should be carried out preferably.

In a second aspect of the object of the invention hereby disclosed a telecommunications network entity configured to carry out the method of the first aspect of the invention to prevent Smishing, is provided. Said telecommunications network entity may be defined as in one of the embodiments of the invention depicted in FIG. 1 wherein said telecommunications network entity is the SMS operator, being configured to verify the signature of the SMS validating the latter using the aforementioned pair of keys. This can also be achieved by means of a firewall accessible by the SMS operator.

The second aspect of the object of the invention also embraces corresponding embodiments to those presented in FIG.2-4, wherein the telecommunications network entity may be defined by the SMS aggregator using any suitable protocol such as the SMPP protocol defining the cited SMPP SMS gateway; or any suitable protocol selected from the aforementioned SMPP and SS7 and UCP defining the respective SMS gateway configured to perform the third SMS signature match.

## Claims

1. A method for SMS validation, the method comprising:
a. a Trusted Third Party generating a pair of keys comprising a private key and a public key,
b. a sender entity sending a SMS to a recipient mobile phone,
c. a SMS operator receiving the public key generated by the Trusted Third Party,
d. signing at least part of the SMS with the private key generated by the Trusted Third Party,
e. sending a SMS signed with the private key generated by the Trusted Third Party,
f. receiving said signed SMS at a SMS operator,
g. performing a first SMS signature match, generating either a validated SMS or a non-validated SMS, and
h. receiving the validated SMS at the recipient mobile phone.

2. The method for SMS validation of claim 1, the method further comprising:
a. sending the public key to at least one SMS aggregator, and
b. performing a second SMS signature match, generating either a validated SMS or a non-validated SMS, carried out at the SMS aggregator which has been provided with the public key generated by the Trusted Third Party.

3. The method for SMS validation of either claim 1 or 2, the method further comprising:
a. sending the public key to at least one SMPP SMS gateway, and
b. performing a third SMS signature match, generating either a validated SMS or a non-validated SMS, carried out at a SMPP SMS gateway which has been provided with the public key generated by the Trusted Third Party.

4. The method for SMS validation of claims 2 and 3 wherein the third SMS signature match is carried out before the second SMS signature match.

5. A telecommunications network entity configured to carry out the method of any one of claims 1 to 4.

6. The telecommunications network entity of claim 5 wherein the network entity is the SMS operator.

7. The telecommunications network entity of claim 5 or 6 wherein the telecommunications network entity is a firewall accessible by the SMS operator.

8. The telecommunications network entity of any one of claims 5 to 7 wherein the telecommunications network entity is a SMS aggregator configured to perform the second SMS signature match.

9. The telecommunications network entity of claim 8 wherein the SMS aggregator comprises a configuration based on a protocol selected from: SMPP, SS7 and UCP defining a SMS gateway configured to perform the third SMS signature match.
